# EUROPÄISCHE PATENTSCHRIFT

(11) **EP 4 492 677 B1**
(45) Veröffentlichungstag und Bekanntmachung des Hinweises auf die Patenterteilung: **14.10.2026**
(21) Anmeldenummer: 24185864.6
(22) Anmeldetag: 02.07.2024
(51) Int. Cl.: H02S 20/23, F24S 25/613

(54) **BEFESTIGER ZU EINER BEFESTIGUNG EINER MONTAGESCHIENE FÜR PHOTOVOLTAIKMODULE AUF EINEM ZIEGELDACH UND ZIEGELDACH MIT DEM BEFESTIGER**
FASTENER FOR FIXING A MOUNTING RAIL FOR PHOTOVOLTAIC MODULES TO A TILE ROOF AND TILE ROOF WITH THE FASTENER
DISPOSITIF DE FIXATION POUR FIXER UN RAIL DE MONTAGE POUR MODULES PHOTOVOLTAÏQUES SUR UN TOIT EN TUILES ET TOIT EN TUILES COMPRENANT LE DISPOSITIF DE FIXATION

(30) Priorität: 07.07.2023 DE 102023117924
(43) Veröffentlichungstag der Anmeldung: 15.01.2025
(73) Patentinhaber: fischerwerke GmbH & Co. KG, 72178 Waldachtal (DE)
(72) Erfinder: Martini, Michele, 30038 Spinea (VE) (IT); Miotto, Moreno, 35020 Brugine (PD) (IT)
(74) Vertreter: Suchy, Ulrich Johannes

(56) Entgegenhaltungen:
- EP-A1- 4 148 980
- EP-B1- 1 856 323
- CN-U- 218 940 991
- NL-C2- 2 010 264

## Beschreibung

Die Erfindung betrifft einen Befestiger zur Befestigung einer Montageschiene für Photovoltaikmodule auf einem Ziegeldach mit den Merkmalen des Oberbegriffs des Anspruchs 1 und ein Ziegeldach mit dem Befestiger nach Anspruch 8.

Das Patent NL 20 11 649 C2 offenbart einen Befestiger zur Befestigung einer Montageschiene für Photovoltaikmodule auf einem Ziegeldach, der einen U-förmigen Haken aufweist, der an einer horizontalen Dachlatte des Ziegeldachs eingehängt wird.

Das Patent NL 20 10 264 C2 offenbart einen weiteren Befestiger zur Befestigung einer Solarmodulkonstruktion auf einem Ziegeldach. Der Befestiger weist ein Fußelement und ein Konsolenelement mit einem ersten und einem zweiten Befestigungsabschnitt auf. Das Fußelement weist ein Klemmteil auf, das zwischen einer Dachschalung und einer Ziegellatte des Ziegeldachs einklemmbar ist. Ein Fixierungsteil dient dazu, das Fußelement auf der Dachschalung zu fixieren, nachdem das Fußelement zwischen der Dachschalung und dem Klemmteil eingeklemmt worden ist. Dies verringert die Gefahr eines Lösens des Fußelements.

Aufgabe der Erfindung ist, eine Einstellbarkeit eines solchen Befestigers auf einem Ziegeldach zu erhöhen.

Diese Aufgabe wird erfindungsgemäß durch einen Befestiger mit den Merkmalen des Anspruchs 1 gelöst.

Der erfindungsgemäße Befestiger weist einen U-förmigen Haken zum Einhängen an einer Dachlatte eines Ziegeldachs zur Befestigung des Befestigers an oder auf dem Ziegeldach auf. Der U-förmige Haken weist zwei Schenkel und ein Joch auf, das die beiden Schenkel verbindet. Zu ihrer Unterscheidung wird einer der beiden Schenkel hier als Befestigungsschenkel und der andere Schenkel als Halteschenkel bezeichnet. Als Befestigungsschenkel wird der Schenkel des U-förmigen Hakens des Befestigers bezeichnet, der sich auf einer den Ziegeln des Ziegeldachs abgewandten Rückseite oder Unterseite der Dachlatte befindet, wenn der U-förmige Haken wie vorgesehen an der Dachlatte eingehängt ist. Der Halteschenkel dient einer Befestigung einer Montageschiene für Photovoltaikmodule an dem Befestiger. Er befindet sich in einem Überlappungsbereich von zwei Dachziegeln zwischen den beiden Dachziegeln und steht an einem unteren Rand eines oberen der beiden Dachziegel zur Befestigung der Montageschiene für die Photovoltaikmodule vor, wenn der U-förmige Haken wie vorgesehen an der Dachlatte eingehängt und das Ziegeldach eingedeckt ist.

Das Joch verbindet die beiden Schenkel. Es erstreckt sich in einer Längsrichtung des Jochs, wobei die die Längsrichtung parallel zu einer Geraden verläuft, die die beiden Punkte verbindet, in denen das Joch in die beiden Schenkel übergeht.

Um eine Stabilität des Befestigers an dem Ziegeldach zu verbessern, weist der erfindungsgemäße Befestiger ein Widerlager an einer Außenseite des Jochs des U-förmigen Hakens zu einer Abstützung des U-förmigen Hakens an einem Dachtragwerk des Ziegeldachs auf. Die Außenseite des Jochs des U-förmigen Hakens ist einer Innenseite des U-förmigen Hakens abgewandt, wobei die Innenseite sich zwischen dem Joch, dem Befestigungsschenkel und dem Halteschenkel befindet. Das Dachtragwerk weist insbesondere Dachsparren und insbesondere zudem eine Schalung auf, die unter den Dachziegeln und auf den Dachsparren angebracht ist. Im montierten Zustand stützt sich das Widerlager auf dem Dachtragwerk ab beziehungsweise es liegt am Dachtragwerk an. Das Widerlager stützt den U-förmigen Haken des Befestigers in Längsrichtung des Jochs des U-förmigen Hakens am Dachtragwerk ab, wobei, wie oben beschrieben, die Längsrichtung die Erstreckung des Jochs vom Befestigungsschenkel zum Halteschenkel ist. Das heißt, das Widerlager stützt das Joch senkrecht zu einer Dachhaut ab, die aus den Dachziegeln besteht oder die Dachziegel aufweist.

Ist der erfindungsgemäße Befestiger wie vorgesehen an dem Ziegeldach befestigt, verringert oder unterbindet das Widerlager eine Beweglichkeit des Jochs des U-förmigen Hakens des erfindungsgemäßen Befestigers senkrecht zu der Dachhaut und stabilisiert auf diese Weise den Befestiger am Joch seines U-förmigen Hakens an dem Dachtragwerk.

Das Widerlager kann an dem Dachtragwerk anliegen oder am Dachtragwerk festgelegt, beispielsweise angeschraubt sein oder werden.

Kennzeichnend für die Erfindung ist, dass zu einer Anpassung an einen Abstand der Dachlatte vom Dachtragwerk das Widerlager in der Längsrichtung des Jochs des U-förmigen Hakens verstellbar ist. Das Widerlager ist in Richtung zum Dachtragwerk, insbesondere senkrecht dazu, am Joch des U-förmigen Hakens des erfindungsgemäßen Befestigers verstellbar. Dadurch lässt sich das Widerlager so einstellen, dass es an dem Dachtragwerk anliegt, wenn der U-förmige Haken an der Dachlatte eingehängt ist.

Die abhängigen Ansprüche haben vorteilhafte Ausgestaltungen und Weiterbildungen der im Anspruch 1 angegebenen Erfindung zum Gegenstand.

Zur Anpassung an unterschiedlich dicke Dachlatten und/oder zu einem Festklemmen an der Dachlatte sieht eine Ausgestaltung der Erfindung vor, dass ein Abstand zwischen den beiden Schenkeln, also der Abstand des Halteschenkels vom Befestigungsschenkel, einstellbar ist.

Eine Weiterbildung der Erfindung sieht eine Formschlussverbindung zwischen dem Widerlager und dem Joch des U-förmigen Hakens zur Verstellung des Widerlagers vor. Der Formschluss wirkt in der Verstellrichtung, also in der Längsrichtung des Jochs, das heißt der Formschluss verhindert eine Bewegung des Widerlagers in der Längsrichtung des Jochs, wenn der Formschluss in Eingriff steht. Zum Einstellen des Widerlagers kann die Formschlussverbindung außer Eingriff gebracht werden, so dass das Widerlager zum Joch, insbesondere in dessen Längsrichtung, bewegbar ist.

Die Formschlussverbindung kann zahnstangenartige ineinandergreifende Profile, kammartige, ineinandergreifende Profile oder ineinandergreifende Rippen und Gegenrippen an einer dem Joch des U-förmigen Hakens zugewandten Seite des Widerlagers und an der Außenseite des Jochs aufweisen. Die Aufzählung ist beispielhaft und nicht abschließend.

Eine Ausgestaltung der Erfindung sieht ein L-förmiges Widerlager mit einem Verbindungsschenkel und einem Auflageschenkel vor. Der Verbindungsschenkel ist oder wird an der Außenseite des Jochs des U-förmigen Hakens des erfindungsgemäßen Befestigers angeordnet beziehungsweise festgelegt. Der Auflageschenkel dient zu einer Anlage am Dachtragwerk. Er steht in einer entgegengesetzten Richtung wie der Befestigungsschenkel vom Joch des U-förmigen Hakens ab.

Vorzugsweise ist das Widerlager derart in der Längsrichtung des Jochs am Joch des U-förmigen Hakens des erfindungsgemäßen Befestigers verstellbar, dass eine Unterseite des Auflageschenkels des Widerlagers bündig mit einer Außenseite des Befestigungsschenkels des U-förmigen Hakens ist oder dass die Unterseite des Auflageschenkels in Bezug auf die Außenseite des Befestigungsschenkels des U-förmigen Hakens nach außen versetzt ist. Letzteres bedeutet, dass ein Abstand der Unterseite des Auflageschenkels des Widerlagers vom Halteschenkel des U-förmigen Hakens des Befestigers senkrecht zu dem Halteschenkel größer ist als ein Abstand der Außenseite des Befestigungsschenkels vom Halteschenkel des U-förmigen Hakens senkrecht zum Halteschenkel. Die Unterseite des Auflageschenkels des L-förmigen Widerlagers befindet sich an einer Außenseite des Widerlagers und ist dem Dachtragwerk zugewandt. Die Außenseite des Befestigungsschenkels des U-förmigen Hakens ist dem Halteschenkel des U-förmigen Hakens abgewandt und somit - wie die Unterseite des Auflageschenkels des Widerlagers - dem Dachtragwerk zugewandt. Die Erfindung schließt nicht aus, dass das Widerlager auch so am Joch des U-förmigen Hakens des erfindungsgemäßen Befestigers verstellt werden kann, dass die Unterseite des Auflageschenkels des Widerlagers einen kleineren Abstand von dem Halteschenkel senkrecht zum Halteschenkel aufweist als die Außenseite des Befestigungsschenkels.

Gegenstand des Anspruchs 7 ist ein Ziegeldach mit einem Dachtragwerk, das Dachlatten aufweist, auf denen Dachziegel angeordnet sind oder werden. Die Dachlatten sind mit einem Zwischenraum vom Dachtragwerk angeordnet, beispielsweise mit Hilfe einer sogenannten Konterlattung. Die Dach- und Konterlatten werden hier nicht als Teil des Dachtragwerks aufgefasst. Das Dachtragwerk umfasst beispielsweise Sparren als Unterkonstruktion und, falls vorhanden, eine darauf liegende Schalung und/oder Abdichtung des Dachtragwerks. Die Konterlattung weist zu den Dachlatten senkrechte oder auch in einem anderen Winkel auf der Unterkonstruktion angeordnete Latten auf, um den Zwischenraum zwischen den Dachziegeln und der Unterkonstruktion beispielsweise zu einer Hinterlüftung der Dachziegel zu schaffen. Ein erfindungsgemäßer Befestiger ist derart mit seinem U-förmigen Haken an einer Dachlatte des Ziegeldachs eingehängt, dass sich der Befestigungsschenkel des U-förmigen Hakens zwischen der Dachlatte und dem Dachtragwerk befindet und das Widerlager beziehungsweise der Auflageschenkel des Widerlagers an dem Dachtragwerk anliegt. Beispielsweise liegt das Widerlager an einem Dachsparren oder einer auf den Dachsparren unter der Dachhaut angebrachten Schalung an.

Wenn das Ziegeldach eingedeckt ist, steht der Halteschenkel auf einem unteren Dachziegel unter einem unteren Rand eines oberen Dachziegels, der den unteren Dachziegel überlappt, vor, derart, dass die Montageschiene unmittelbar oder mittelbar am Halteschenkel des Befestigers angebracht werden kann.

Insbesondere werden mehrere Befestiger mit ihren U-förmigen Haken in Abständen voneinander nebeneinander an einer Dachlatte eingehängt derart, dass nach einer Eindeckung des Ziegeldachs, also dem Auflegen der Dachziegel auf die Dachlatten des Dachtragwerks, eine Montageschiene zur Befestigung von Photovoltaikmodulen an den Halteschenkeln des Befestigers angebracht werden kann. Die Montageschiene kann unmittelbar oder mittelbar beispielsweise mit einem Zwischenstück oder dergleichen an den Halteschenkeln der mit Abstand nebeneinander auf dem Ziegeldach angeordneten Befestiger angebracht werden. Insbesondere werden Befestiger an mehreren Dachlatten übereinander eingehängt derart, dass mehrere Montageschienen für Photovoltaikmodule parallel zueinander übereinander über der Dachhaut angebracht werden können.

Eine Weiterbildung der Erfindung sieht vor, dass sich ein Dachziegel zwischen der Dachlatte und dem Halteschenkel des U-förmigen Hakens befindet.

Vorzugsweise ist das Widerlager mit dem Dachtragwerk fest verbunden, insbesondere verschraubt, insbesondere mit als Unterkonstruktion wirkenden Sparren.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigt:

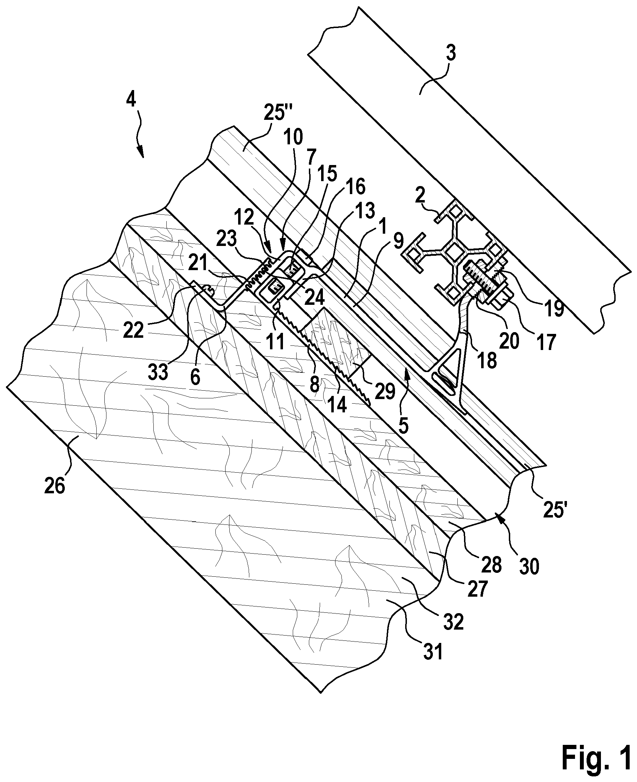

- Figur 1: einen Querschnitt parallel zu Dachsparren eines kleinen Ausschnitts eines erfindungsgemäßen Ziegeldachs im Bereich eines erfindungsgemäßen Befestigers, der in der Zeichnung in einer Seitenansicht zu sehen ist.

Der in der Zeichnung dargestellte, erfindungsgemäße Befestiger 1 ist zu einer Befestigung einer Montageschiene 2 für Photovoltaikmodule 3 auf einem Ziegeldach 4 vorgesehen. Der Befestiger 1 weist einen U-förmigen Haken 5 und ein Widerlager 6 auf. Der U-förmige Haken 5 weist ein Joch 7 und zwei Schenkel auf, von denen einer hier als Befestigungsschenkel 8 und ein anderer als Halteschenkel 9 bezeichnet wird. Im Ausführungsbeispiel sind der Befestigungsschenkel 8 und der Halteschenkel 9 parallel zueinander oder jedenfalls nahezu parallel zueinander; ihr Abstand voneinander vergrößert sich mit zunehmendem Abstand von dem Joch 7 nur wenig. Das Joch 7 verbindet die beiden Schenkel 8, 9 an einem Ende. Im Ausführungsbeispiel ist das Joch 7 gerade und erstreckt sich vom Befestigungsschenkel 8 zum Halteschenkel 9 beziehungsweise umgekehrt, wobei die Erstreckung des Jochs 7 vom Befestigungsschenkel 8 zum Halteschenkel 9 hier nachfolgend auch als Längsrichtung des Jochs 7 bezeichnet werden wird.

Im Ausführungsbeispiel ist der U-förmige Haken 5 des erfindungsgemäßen Befestigers 1 zweiteilig, er weist eine Schiebeführung 10 im Joch 7 auf, durch die der Abstand des Befestigungsschenkels 8 vom Halteschenkel 9 und damit die Höhe des Jochs 7 in seiner Längsrichtung verstellbar ist. Zur Ausbildung der Schiebeführung 10 weist der Befestigungsschenkel 8 an einem jochseitigen Ende einen Vorsprung 11 auf, der einen Teil des Jochs 7 bildet und der rechtwinklig vom Befestigungsschenkel 8 in Richtung des Halteschenkels 9 absteht. Im Ausführungsbeispiel weist der Vorsprung 11 von einer Seite auf den U-förmigen Haken 5 gesehen die Form eines flachen Rechteckrohrs auf, dessen lange Seite von dem Befestigungsschenkel 8 in Richtung des Halteschenkels 9 absteht.

Des Weiteren weist die Schiebeführung 10 zwei Laschen 12, 13 auf, die parallel zueinander rechtwinklig von dem Halteschenkel 9 in Richtung des Befestigungsschenkels 8 abstehen. Die Laschen 12, 13 und der Vorsprung 11 bilden gemeinsam das Joch 7. Eine erste Lasche 12 der beiden Laschen 12, 13 steht von einem jochseitigen Ende des Halteschenkels 9 in Richtung des Befestigungsschenkels 8 ab. Die zweite Lasche 13 weist einen Abstand von der ersten Lasche 12 auf, der einer Länge der kurzen Seite des Vorsprungs 11 des Befestigungsschenkels 8 entspricht. Der Abstand der beiden vom Halteschenkel 9 abstehenden Laschen 12, 13 voneinander ist so groß wie der vom Befestigungsschenkel 8 abstehende Vorsprung 11 in einer Längsrichtung des Befestigungsschenkels 8 dick ist.

In zusammengesetztem Zustand ragt der vom jochseitigen Ende des Befestigungsschenkels 8 abstehende Vorsprung 11 zwischen die beiden Laschen 12, 13, die vom Halteschenkel 9 abstehen, und die beiden Laschen 12, 13, die zusammen mit dem Vorsprung 11 die Schiebeführung 10 bilden, liegen an einander abgewandten Außenseiten des Vorsprungs 11 an, derart dass die Laschen 12, 13 den Halteschenkel 9 in Richtung des Abstands vom Befestigungsschenkel 8 verschieblich am Vorsprung 11 des Befestigungsschenkels 8 führen.

Der Vorsprung 11 des Befestigungsschenkels 8 und die Laschen 12, 13 des Halteschenkels 9 bilden nicht nur die Schiebeführung 10 für die Abstandsverstellung und Abstandseinstellung des Halteschenkels 9 vom Befestigungsschenkel 8, sondern bilden zugleich auch das Joch 7 des U-förmigen Hakens 5 des erfindungsgemäßen Befestigers 1, das im Ausführungsbeispiel zweiteilig ausgebildet ist.

Es sind einstückige Ausführungen des U-förmigen Hakens 5 des erfindungsgemäßen Befestigers 1 möglich (nicht dargestellt).

Im Ausführungsbeispiel weist eine dem Halteschenkel 9 zugewandte Innenseite des Befestigungsschenkels 8 ein Sägezahnprofil 14 auf, das im montierten Zustand einen festen Halt an einer Dachlatte 29 gewährleistet.

In einer Mitte einer dem Befestigungsschenkel 8 fernen, kurzen Seite des Vorsprungs 11 weist der Vorsprung 11 ein Gewindeloch 15 auf, in das eine Klemmschraube 16 geschraubt ist, die durch ein Durchgangloch im Halteschenkel 9 gesteckt ist, das mit dem Gewindeloch 15 fluchtet. Mit der Klemmschraube 16 lässt sich der Abstand des Halteschenkels 9 vom Befestigungsschenkel 8 einstellen und die Schenkel 8, 9 lassen sich gegen eine Dachlatte 29 verspannen.

An einem jochfernen Ende weist der Halteschenkel 9 im dargestellten Ausführungsbeispiel der Erfindung ein Abwinklung 18 auf einer dem Befestigungsschenkel 8 abgewandten Außenseite auf. In einem Abstand von dem Halteschenkel 9 weist die Abwinklung 18 ein Langloch 19 auf, das sich senkrecht zu dem Halteschenkel 9 erstreckt.

Auf einer dem Joch 7 des U-förmigen Hakens 5 abgewandten Seite weist die Abwinklung 18 im Bereich des Langlochs 19 eine Profilierung 20 nach Art eines Parallelrändels quer zum Langloch 19 auf.

Das Widerlager 6 ist von der Seite gesehen L-förmig, es weist einen Verbindungsschenkel 21 und einen Auflageschenkel 22 auf. Der Verbindungsschenkel 21 des Widerlagers 6 wird beziehungsweise ist derart an einer Außenseite des Jochs 7 des U-förmigen Hakens 5 des erfindungsgemäßen Befestigers 1 angeordnet, dass der Auflageschenkel 22 des Widerlagers 6 entgegengesetzt wie der Befestigungsschenkel 8 des U-förmigen Hakens 5 vom Joch 7 des U-förmigen Hakens 5 absteht. Als Außenseite des Jochs 7 wird hier eine den freien Enden des Befestigungsschenkels 8 und des Halteschenkels 9 des U-förmigen Hakens 5 abgewandte Seite des Jochs 7 bezeichnet. Die Außenseite des Jochs 7, an der der Verbindungsschenkel 21 des Widerlagers 6 angeordnet ist oder wird, ist also einer Innenseite des U-förmigen Hakens 5, das heißt einem Zwischenraum zwischen dem Befestigungsschenkel 8, dem Joch 7 und dem Halteschenkel 9, abgewandt.

Durch eine Bewegung des Widerlagers 6 in der Längsrichtung des Jochs 7, das heißt in Richtung parallel zu dem Abstand des Befestigungsschenkels 8 vom Halteschenkel 9, lässt sich das Widerlager 6 in eine Lage bringen, in der eine Unterseite seines Auflageschenkels 22 bündig mit der Außenseite des Befestigungsschenkels 8 des U-förmigen Hakens 5 ist, und in Lagen, in denen die Unterseite des Auflageschenkels 22 des Widerlagers 6 bezüglich der Außenseite des Befestigungsschenkels 8 nach außen versetzt ist. Es werden hier eine dem Halteschenkel 9 abgewandte Seite des Befestigungsschenkels 8 als dessen Außenseite und eine auf einer Außenseite des L-förmigen Widerlagers 6 befindliche Seite des Auflageschenkels 22 des Widerlagers 6 als dessen Unterseite bezeichnet. Bündig ist die Unterseite des Auflageschenkels 22 mit der Außenseite des Befestigungsschenkels 8, wenn sich die Unterseite in einer Ebene mit der Außenseite befindet. Nach außen zur Außenseite des Befestigungsschenkels 8 versetzt ist die Unterseite des Auflageschenkels 22, wenn sie sich auf einer dem Halteschenkel 9 abgewandten Seite der Ebene befindet, in der sich die Außenseite des Befestigungsschenkels 8 befindet.

An einer dem Joch 7 des U-förmigen Hakens 5 des erfindungsgemäßen Befestigers 1 zugewandten Außenseite weist der Verbindungsschenkel 21 des Widerlagers 6 des erfindungsgemäßen Befestigers 1 gerade Rippen 23 auf, die sich parallel zu der Unterseite des Auflageschenkels 22 erstrecken. Das Joch 7 des U-förmigen Hakens 5 weist gegengleiche Gegenrippen 24 auf, die zwischen die Rippen 23 des Verbindungsschenkels 21 des Widerlagers 6 greifen, wenn das Widerlager 6 in einer vorgesehenen Weise an der Außenseite des Jochs 7 angeordnet ist. Die Rippen 23 und die Gegenrippen 24 bewirken einen Formschluss zwischen dem Widerlager 6 und dem Joch 7 des U-förmigen Hakens 5, der das Widerlager 6 in Richtung senkrecht zu der Außenseite des Befestigungsschenkels 8 des U-förmigen Hakens 5 am Joch 7 hält, wenn die Gegenrippen 24 zwischen die Rippen 23 greifen. Die Rippen 23 und die Gegenrippen 24 ermöglichen die Verstellung des Widerlagers 6 senkrecht zur Außenseite des Befestigungsschenkels 8 des U-förmigen Hakens 5 in Schritten, die so groß sind wie eine Rippe 23 und eine Gegenrippe 24 dick sind.

Im Auflageschenkel 22 weist das Widerlager 6 ein oder auch mehrere Löcher zum Durchstecken einer Befestigungsschraube 33 zu einer Befestigung des Widerlagers 6 an einem Dachtragwerk auf.

Das erfindungsgemäße Ziegeldach 4, von dem die Zeichnung einen kleinen Ausschnitt im Bereich eines erfindungsgemäßen Befestigers 1 zeigt, ist beispielsweise ein Satteldach oder ein Pultdach mit einer geneigten Dachfläche beziehungsweise einer geneigten Dachhaut, die aus Dachziegeln 25 besteht oder jedenfalls Dachziegel 25 aufweist. Das Ziegeldach 4 weist schräg von einer in der Zeichnung nicht sichtbaren Dachtraufe nach oben zu einem Dachfirst oder einem oberen Dachrand verlaufende Dachsparren 26 auf. Die Dachsparren 26 sind parallel mit Abstand voneinander nebeneinander angeordnet und bilden eine Unterkonstruktion 32. Im Ausführungsbeispiel ist auf den Dachsparren 26 eine Schalung 27 aus Brettern angeordnet. Auf der Schalung 27 sind Konterlatten 28 angebracht, die auf den Dachsparren 26 angeordnet sind und die auch als Konterlattung aufgefasst werden können. Quer zu den Konterlatten 28 und zu den Dachsparren 26 sind Dachlatten 29 auf den Konterlatten 28 angebracht, die - im Ausführungsbeispiel - horizontal verlaufen, was allerdings nicht zwingend für die Erfindung ist. Auf die Dachlatten 29 sind die Dachziegel 25 als Dachhaut gelegt beziehungsweise angeordnet.

Durch die Konterlatten 28 besteht ein Zwischenraum 30 zwischen den Dachlatten 29 und der Schalung 27. Die Dachsparren 26 und die Schalung 27 bilden ein Dachtragwerk 31 des erfindungsgemäßen Ziegeldachs 4.

Nachdem Dachziegel 25 von der Dachtraufe bis zu der Dachlatte 29 gelegt worden sind, werden an der Dachlatte 29 in Abständen nebeneinander Befestiger 1 mit ihren U-förmigen Haken 5 derart eingehängt, dass sich der Befestigungsschenkel 8 des U-förmigen Hakens 5 der Befestiger 1 unter der Dachlatte 29 und der Halteschenkel 9 auf einem der Dachziegel 25 befindet, wobei dieser Dachziegel 25 nachfolgend als unterer Dachziegel 25' bezeichnet werden wird.

Danach wird das Ziegeldach 4 weiter eingedeckt bis zu einer weiteren Dachlatte 29, die sich in einem Abstand oberhalb der Dachlatte 29 befindet, an der zuvor Befestiger 1 eingehängt worden sind. Die Dachlatten 29, an denen Befestiger 1 eingehängt werden, bestimmen sich durch die Photovoltaikmodule 3, die einen Abstand der Montageschienen 2 vorgeben.

Wenn das Ziegeldach 4 eingedeckt ist, befindet sich der Halteschenkel 9 des U-förmigen Hakens 5 der Befestiger 1 auf dem unteren Dachziegel 25' und unter einem oberen Dachziegel 25", wobei der Halteschenkel 9 nach unten unter dem oberen Dachziegel 25" vorsteht, derart, dass die Abwinklung 18 nach oben von der von den Dachziegeln 25 gebildeten Dachhaut absteht. Die Montageschienen 2 werden parallel zueinander an den Abwinklungen 18 mit Schrauben 17, die durch die Langlöcher 19 in den Abwinklungen 18 gesteckt werden, an den Abwinklungen 18 befestigt. An den Montageschienen 4 werden die Photovoltaikmodule 3 befestigt.

Der Halteschenkel 9 des U-förmigen Hakens 5 der Befestiger 1 liegt auf dem unteren Dachziegel 25' auf und/oder der Befestigungsschenkel 8 des U-förmigen Hakens 5 der Befestiger 1 liegt auf der Schalung 27 des Dachtragwerks 31 auf. Mit der Klemmschraube 16 lassen sich der Befestigungsschenkel 8 und der Halteschenkel 9 zusammenspannen und der U-förmige Haken 5 auf dem unteren Dachziegel 25' und der Dachlatte 29 festspannen.

Bevor die oberen Dachziegel 25" auf die Dachlatten 29 gelegt werden, wird das Widerlager 6 derart an der Außenseite des Jochs 7 des U-förmigen Hakens 5 der Befestiger 1 angeordnet, dass der Auflageschenkel 22 des Widerlagers 6 auf der Schalung 27 oder allgemein auf der Unterkonstruktion 32 des Dachtragwerks 31 aufliegt und die Rippen 23 am Verbindungsschenkel 21 des Widerlagers 6 zwischen die Gegenrippen 24 an der Außenseite des Jochs 7 des U-förmigen Hakens 5 der Befestiger 1 greifen. Dadurch stützt das Widerlager 6 den U-förmigen Haken 5 der Befestiger 1 an der Schalung 27 beziehungsweise am Dachtragwerk 31 ab. Zusätzlich kann der Auflageschenkel 22 des Widerlagers 6 an der Schalung 27 und den Dachsparren 26 festgeschraubt werden, wodurch das Widerlager den U-förmige Haken 5 an seinem Joch 7 zusätzlich zugfest mit der Schalung 27 beziehungsweise der Unterkonstruktion 32 des Dachtragwerks 31 verbindet.

So lange die oberen Dachziegel 25" nicht auf die Dachlatten 29 gelegt sind, sind die Dachlatten 29 zum Einhängen der U-förmigen Haken 5 der erfindungsgemäßen Befestiger 1 und sind die U-förmigen Haken 5 der Befestiger 1 im Bereich ihrer Joche 7 zum Anbringen des Widerlagers 6 zugänglich.

### Bezugszeichenliste

- 1: Befestiger
- 2: Montageschiene
- 3: Photovoltaikmodul
- 4: Ziegeldach
- 5: U-förmiger Haken
- 6: Widerlager
- 7: Joch
- 8: Befestigungsschenkel
- 9: Halteschenkel
- 10: Schiebeführung
- 11: Vorsprung
- 12: erste Lasche
- 13: zweite Lasche
- 14: Sägezahnprofil
- 15: *Gewindeloch*
- 16: Klemmschraube
- 17: Montageschraube
- 18: Abwinklung
- 19: Langloch
- 20: Profilierung
- 21: Verbindungsschenkel
- 22: Auflageschenkel
- 23: Rippe
- 24: Gegenrippe
- 25': unterer Dachziegel
- 25": oberer Dachziegel
- 26: Dachsparren
- 27: Schalung
- 28: Konterlatte
- 29: Dachlatte
- 30: Zwischenraum
- 31: Dachtragwerk
- 32: Unterkonstruktion
- 33: Befestigungsschraube

## Patentansprüche

1. Befestiger (1) zu einer Befestigung einer Montageschiene (2) für Photovoltaikmodule (3) auf einem Ziegeldach (4), wobei der Befestiger (1) einen U-förmigen Haken (5) zum Einhängen an einer Dachlatte (29) aufweist, wobei der U-förmige Haken (5) ein Joch (7), einen Befestigungsschenkel (8) und einen Halteschenkel (9) umfasst, wobei der Befestiger (1) ein Widerlager (6) an einer Außenseite des Jochs (7) des U-förmigen Hakens (5) zu einer Abstützung des U-förmigen Hakens (5) in einer Längsrichtung des Jochs (7) des U-förmigen Hakens (5) an einem Dachtragwerk (31) des Ziegeldachs (4) aufweist, **dadurch gekennzeichnet, dass** das Widerlager (6) in der Längsrichtung des Jochs (7) des U-förmigen Hakens (5) verstellbar ist.

2. Befestiger (1) nach Anspruch 1, **dadurch gekennzeichnet, dass** ein Abstand zwischen dem Befestigungsschenkel (8) und dem Halteschenkel (9) des U-förmigen Hakens (5) einstellbar ist.

3. Befestiger (1) nach Anspruch 1 oder 2, **dadurch gekennzeichnet, dass** der Befestiger (1) eine Formschlussverbindung zwischen dem Widerlager (6) und dem Joch (7) des U-förmigen Hakens (5) zur Verstellung des Widerlagers (6) aufweist.

4. Befestiger (1) nach Anspruch 3, **dadurch gekennzeichnet, dass** die Formschlussverbindung zahnstangenartige, ineinandergreifende Profile, kammartige, ineinandergreifende Profile oder ineinandergreifende Rippen (23) und Gegenrippen (24) an einer dem Joch (7) des U-förmigen Hakens (5) zugewandten Seite des Widerlagers (6) und an der Außenseite des Jochs (7) aufweist.

5. Befestiger (1) nach einem oder mehreren der vorhergehenden Ansprüche, **dadurch gekennzeichnet, dass** das Widerlager (6) L-förmig ist, dass ein Verbindungsschenkel (21) des Widerlagers (6) an der Außenseite des Jochs (7) des U-förmigen Hakens (5) des Befestigers (1) angeordnet ist und ein Auflageschenkel (22) des Widerlagers (6) in einer dem Befestigungsschenkel (8) des U-förmigen Hakens (5) entgegengesetzten Richtung von dem Joch (7) des U-förmigen Hakens (5) absteht.

6. Befestiger (1) nach Anspruch 5, **dadurch gekennzeichnet, dass** eine Unterseite des Auflageschenkels (22) des Widerlagers (6) bündig mit einer Außenseite des Befestigungsschenkels (8) des U-förmigen Hakens (5) ist oder in Bezug auf die Außenseite des Befestigungsschenkels (8) des U-förmigen Hakens (5) nach außen versetzt ist.

7. Ziegeldach (4) mit Dachlatten (29), die mit einem Zwischenraum (30) von einer Unterkonstruktion (32) eines Dachtragwerks (31) des Ziegeldachs (4) angeordnet sind, und mit einem Befestiger (1) nach einem oder mehreren der vorhergehenden Ansprüche, **dadurch gekennzeichnet, dass** der U-förmige Haken (5) des Befestigers (1) an einer Dachlatte (29) des Ziegeldachs (4) derart eingehängt ist, dass sich der Befestigungsschenkel (8) des U-förmigen Hakens (5) des Befestigers (1) zwischen der Dachlatte (29) und dem Dachtragwerk (31) befindet und dass das Widerlager (6) am Dachtragwerk (31) anliegt.

8. Ziegeldach (4) nach Anspruch 7, **dadurch gekennzeichnet, dass** sich ein unterer Dachziegel (25') des Ziegeldachs (4) zwischen der Dachlatte (29) und dem Halteschenkel (9) des U-förmigen Hakens (5) befindet, und dass das Widerlager (6) des Befestigers (1) oberhalb des unteren Dachziegels (25') an der Unterkonstruktion (32) des Dachtragwerks (31) festgelegt ist.

9. Ziegeldach (4) nach einem der Ansprüche 7 oder 8, **dadurch gekennzeichnet, dass** das Widerlager (6) mit dem Dachtragwerk (31) fest verbunden ist, insbesondere verschraubt ist.

## Claims

1. Fastener (1) for fastening a mounting rail (2) for photovoltaic modules (3) on a tiled roof (4), wherein the fastener (1) has a U-shaped hook (5) for hooking onto a roof batten (29), wherein the U-shaped hook (5) comprises a yoke (7), a fastening leg (8) and a holding leg (9), wherein the fastener (1) has an abutment (6) on an outer side of the yoke (7) of the U-shaped hook (5) for supporting the U-shaped hook (5) in a longitudinal direction of the yoke (7) of the U-shaped hook (5) on a roof support structure (31) of the tiled roof (4), **characterized in that** the abutment (6) is adjustable in the longitudinal direction of the yoke (7) of the U-shaped hook (5).

2. Fastener (1) according to claim 1, **characterized in that** a distance between the fastening leg (8) and the holding leg (9) of the U-shaped hook (5) is adjustable.

3. Fastener (1) according to claim 1 or 2, **characterized in that** the fastener (1) has a positive-locking connection between the abutment (6) and the yoke (7) of the U-shaped hook (5) for adjusting the abutment (6).

4. Fastener (1) according to claim 3, **characterized in that** the positive-locking connection has rack-like interengaging profiles, comb-like interengaging profiles or interengaging ribs (23) and counter-ribs (24) on a side of the abutment (6) facing the yoke (7) of the U-shaped hook (5) and on the outer side of the yoke (7).

5. Fastener (1) according to one or more of the preceding claims, **characterized in that** the abutment (6) is L-shaped, **in that** a connecting leg (21) of the abutment (6) is arranged on the outer side of the yoke (7) of the U-shaped hook (5) of the fastener (1) and a support leg (22) of the abutment (6) projects from the yoke (7) of the U-shaped hook (5) in a direction opposite to the fastening leg (8) of the U-shaped hook (5).

6. Fastener (1) according to claim 5, **characterized in that** an underside of the support leg (22) of the abutment (6) is flush with an outer side of the fastening leg (8) of the U-shaped hook (5) or is offset outward with respect to the outer side of the fastening leg (8) of the U-shaped hook (5).

7. Tiled roof (4) with roof battens (29) which are arranged at an intermediate space (30) from a substructure (32) of a roof support structure (31) of the tiled roof (4), and with a fastener (1) according to one or more of the preceding claims, **characterized in that** the U-shaped hook (5) of the fastener (1) is hooked onto a roof batten (29) of the tiled roof (4) such that the fastening leg (8) of the U-shaped hook (5) of the fastener (1) is located between the roof batten (29) and the roof support structure (31) and that the abutment (6) rests against the roof support structure (31).

8. Tiled roof (4) according to claim 7, **characterized in that** a lower roof tile (25') of the tiled roof (4) is located between the roof batten (29) and the holding leg (9) of the U-shaped hook (5), and that the abutment (6) of the fastener (1) is fixed to the substructure (32) of the roof support structure (31) above the lower roof tile (25').

9. Tiled roof (4) according to one of claims 7 or 8, **characterized in that** the abutment (6) is fixedly connected, in particular screwed, to the roof support structure (31).

## Revendications

1. Dispositif de fixation (1) pour la fixation d'un rail de montage (2) pour modules photovoltaïques (3) sur un toit en tuiles (4), le dispositif de fixation (1) présentant un crochet en forme de U (5) destiné à être accroché à un liteau (29), le crochet en forme de U (5) comprenant une traverse (7), une branche de fixation (8) et une branche de retenue (9), le dispositif de fixation (1) présentant une butée (6) sur une face extérieure de la traverse (7) du crochet en forme de U (5) pour un appui du crochet en forme de U (5) dans une direction longitudinale de la traverse (7) du crochet en forme de U (5) sur une charpente de toit (31) du toit en tuiles (4), **caractérisé en ce que** la butée (6) est réglable dans la direction longitudinale de la traverse (7) du crochet en forme de U (5).

2. Dispositif de fixation (1) selon la revendication 1, **caractérisé en ce que** une distance entre la branche de fixation (8) et la branche de retenue (9) du crochet en forme de U (5) est ajustable.

3. Dispositif de fixation (1) selon la revendication 1 ou 2, **caractérisé en ce que** le dispositif de fixation (1) présente une liaison par complémentarité de forme entre la butée (6) et la traverse (7) du crochet en forme de U (5) pour le réglage de la butée (6).

4. Dispositif de fixation (1) selon la revendication 3, **caractérisé en ce que** la liaison par complémentarité de forme présente des profils s'engageant les uns dans les autres à la manière d'une crémaillère, des profils s'engageant les uns dans les autres à la manière d'un peigne ou des nervures (23) et contre-nervures (24) s'engageant les unes dans les autres sur une face de la butée (6) tournée vers la traverse (7) du crochet en forme de U (5) et sur la face extérieure de la traverse (7).

5. Dispositif de fixation (1) selon une ou plusieurs des revendications précédentes, **caractérisé en ce que** la butée (6) est en forme de L, **en ce qu'**une branche de liaison (21) de la butée (6) est disposée sur la face extérieure de la traverse (7) du crochet en forme de U (5) du dispositif de fixation (1) et une branche d'appui (22) de la butée (6) fait saillie de la traverse (7) du crochet en forme de U (5) dans une direction opposée à la branche de fixation (8) du crochet en forme de U (5).

6. Dispositif de fixation (1) selon la revendication 5, **caractérisé en ce que** une face inférieure de la branche d'appui (22) de la butée (6) est à fleur d'une face extérieure de la branche de fixation (8) du crochet en forme de U (5) ou est décalée vers l'extérieur par rapport à la face extérieure de la branche de fixation (8) du crochet en forme de U (5).

7. Toit en tuiles (4) avec des liteaux (29) qui sont disposés à un espace intermédiaire (30) d'une sous-construction (32) d'une charpente de toit (31) du toit en tuiles (4), et avec un dispositif de fixation (1) selon une ou plusieurs des revendications précédentes, **caractérisé en ce que** le crochet en forme de U (5) du dispositif de fixation (1) est accroché à un liteau (29) du toit en tuiles (4) de telle sorte que la branche de fixation (8) du crochet en forme de U (5) du dispositif de fixation (1) se trouve entre le liteau (29) et la charpente de toit (31) et que la butée (6) repose contre la charpente de toit (31).

8. Toit en tuiles (4) selon la revendication 7, **caractérisé en ce que** une tuile inférieure (25') du toit en tuiles (4) se trouve entre le liteau (29) et la branche de retenue (9) du crochet en forme de U (5), et **en ce que** la butée (6) du dispositif de fixation (1) est fixée à la sous-construction (32) de la charpente de toit (31) au-dessus de la tuile inférieure (25').

9. Toit en tuiles (4) selon l'une des revendications 7 ou 8, **caractérisé en ce que** la butée (6) est reliée de manière fixe, en particulier vissée, à la charpente de toit (31).
